Europäisches Patentamt

European Patent Office

Office européen des brevets

(19)

(11) Veröffentlichungsnummer: **0 081 216**
**A1**

(12) # EUROPÄISCHE PATENTANMELDUNG

(21) Anmeldenummer: **82111213.3**

(22) Anmeldetag: **02.12.82**

(51) Int. Cl.³: **F 16 K 19/00**
**B 05 B 1/18** ·

(30) Priorität: **03.12.81 DE 8135549 U**

(43) Veröffentlichungstag der Anmeldung:
**15.06.83 Patentblatt 83/24**

(84) Benannte Vertragsstaaten:
**AT BE CH DE FR GB IT LI NL SE**

(71) Anmelder: **Winter, Rolf**
**Kaspar-Kerll-Strasse 2**
**D-8000 München 60(DE)**

(72) Erfinder: **Winter, Rolf**
**Kaspar-Kerll-Strasse 2**
**D-8000 München 60(DE)**

(54) **Handbetätigte Absperrvorrichtung für Flüssigkeitssystem.**

(57) Die Erfindung betrifft eine handbetätigte Absperrvorrichtung für Flüssigkeitsleitungen mit einem damit lösbar verbundenen Ausgabeteil.

Um den Warmwasserverbrauch beim Benutzen einer
Handbrause, insbesondere beim Duschen, auf einfache
Weise einschränken zu können, wird erfindungsgemäß eine
Absperrvorrichtung vorgeschlagen, die gekennzeichnet ist
durch ein mit einer Durchgangsbohrung (1) versehenes
Gehäuse (2), das eingangsseitig ein Außengewinde (3),
ausgangsseitig ein Muffengewinde (4) aufweist und in dem
ein die Durchgangsbohrung (1) schließender bzw. freigebender Absperrkörper angeordnet ist.

EP 0 081 216 A1

Rolf Winter

Kaspar-Kerll-Str. 2

8000 München 60                                    18.11.82


## Handbetätigte Absperrvorrichtung für Flüssigkeitsysteme


Die Erfindung betrifft eine handbetätigte Absperrvorrichtung für Flüssigkeitsleitungen mit einem damit lösbar verbundenen Ausgabeteil, insbesondere für Handbrausen.

Aus der DE-OS 30 02 461 ist eine Handbrause bekannt, in der im Haltegriff
eine Absperrvorrichtung integriert ist, mit welcher die gewünschte
Wasserdurchflußmenge eingestellt werden kann.

Der Nachteil dieser bekannten Vorrichtung ist einerseits im komplizierten
Aufbau des Brausehandgriffs zu sehen und zum anderen in dem verhältnismäßig teuren Anschaffungspreis.

Aufgabe der Erfindung ist es daher, eine Absperrvorrichtung der eingangs
genannten Art zu schaffen, die einfach im Aufbau und preiswert in der
Herstellung ist.

Diese Aufgabe wird durch die im Anspruch 1 aufgeführten Mittel gelöst.

Die weitere Ausbildung bzw. Ausführungsformen der Erfindung gehen aus den Merkmalen der Unteransprüche hervor.

Mit der Erfindung wird ein einfaches Zubehörteil geschaffen, das zwischen Flüssigkeitsschlauch und Ausgabeteil, beispielsweise zwischen Wasserschlauch und Handbrause auch von Laien eingesetzt werden kann. Mit der einfachen und damit auch kostengünstigen Absperrvorrichtung ist die Möglichkeit gegeben, Warmwasser und damit Energie zu sparen. Ein weiterer Vorteil ist, daß die Absperrvorrichtung, sofern sie an Duschen mit üblicher Mischbatterie, d. h. an nicht thermostatisch gesteuerter Mischbatterie, benutzt wird, es nicht erforderlich macht, ein einmal eingestelltes Mischverhältnis von Warm- und Kaltwasser immer wieder neu einstellen zu müssen, wenn die Dusche nach kurzzeitigem Absperren wieder benutzt wird. Demnach ist die erfindungsgemäße Absperrvorrichtung insbesondere vorteilhaft an einer Dusche anzubringen, womit das richtig temperierte Wasser während des Einseifens oder Haarewaschens kurzzeitig abgestellt werden kann. Da die Absperrvorrichtung im wesentlichen aus Kunststoff gefertigt sein kann, ist sie extrem leicht, womit die Handhabung bequem und eine Beschädigung der Wanne bei etwa herabfallender Handbrause vermieden ist.

Trotz der Einsparung an Heizenergie durch das kurzzeitige Absperren des Wassers ist gleichzeitig auch ein Komfort gegeben, da der Benutzer nicht durch das laufende Wasser im Moment des Nichtbenutzens gestört ist.

Die Absperrvorrichtung ist nicht absolut abdichtend ausgebildet. Durch einen geringfügigen Wasserdurchlauf soll der Benutzer erinnert sein, den oder die Wasserhähne nach dem Duschen zu schließen.

Schließlich kann die erfindungsgemäße Absperrvorrichtung auch an anderen Flüssigkeitssystemen, beispielsweise auch zwischen Gartenschlauch und Spritzventil oder dergleichem eingesetzt werden.

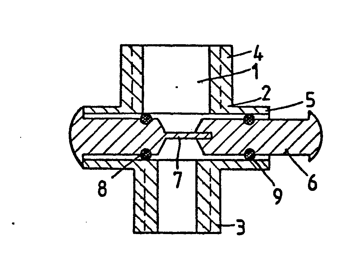

Ein Ausführungsbeispiel der Erfindung ist in der Zeichnung dargestellt und wird nachstehend näher beschrieben.

Die Absperrvorrichtung weist ein mit einer Durchgangsbohrung 1 versehenes Gehäuse 2 auf, das als einfaches Dreh- oder Gußteil herstellbar ist. Das Gehäuse 2 ist eingangsseitig mit einem Außengewinde 3 und ausgangsseitig mit einem Muffengewinde 4 versehen, und in ihm ist ein die Durchgangsbohrung 1 schließender bzw. freigebender Absperrkörper angeordnet.

Im dargestellten Ausführungsbeispiel ist der Absperrkörper ein im Gehäuse 2 in einer zur Durchgangsbohrung 1 quer verlaufenden Bohrung 5 angeordneter zylindrischer Schieber 6, der einen im Querschnitt verminderten Abschnitt 7 und beidseitig davon Dichtungen 8 und 9 aufweist. Der Schieber 6 besteht aus zwei miteinander mittels Preßsitz verbundenen Teilen, wobei ein Teil im Querschnitt bis auf einen zylindrischen Stift abgesetzt ist, dessen Ende in einer Bohrung im anderen Teil sitzt.

Die Montage der Absperrvorrichtung an einer Handbrause ist denkbar einfach. Nach Lösen der Handbrause vom Anschlußschlauch wird die Absperrvorrichtung mittels der entsprechenden Gewindeenden sowohl mit dem Brausegriff als auch mit dem Schlauchende verbunden.

Die Absperrvorrichtung kann selbstverständlich auch unmittelbar an der Mischbatterie angeschraubt werden. Auf diese Weise wird der Brauseschlauch im geschlossenen Zustand der Absperrvorrichtung nicht mit Wasserdruck belastet.

Rolf Winter

Kaspar-Kerll-Str. 2

8000 München 60                                18.11.82


<u>Ansprüche</u>


1.  Handbetätigte Absperrvorrichtung für Flüssigkeitsleitungen mit einem
    damit lösbar verbundenen Ausgabeteil, insbesondere für Handbrausen,
    <u>gekennzeichnet durch</u> ein mit der Leitung verbindbares, mit einer
    Durchgangsbohrung (1) versehenes Gehäuse (2), das eingangsseitig ein
    Außengewinde (3), außenseitig ein Muffengewinde (4) aufweist und in
    dem ein die Durchgangsbohrung (1) schließender bzw. freigebender Absperrkörper angeordnet ist.


2.  Absperrvorrichtung nach Anspruch 1, dadurch gekennzeichnet, daß der
    Absperrkörper ein im Gehäuse (2) in einer zur Durchgangsbohrung (1)
    quer verlaufenden Bohrung (5) angeordneter zylindrischer Schieber
    (6) ist, der einen im Querschnitt verminderten Abschnitt (7) und
    beidseitig davon Dichtungen (8, 9) aufweist.


3.  Absperrvorrichtung nach Anspruch 1, dadurch gekennzeichnet, daß der
    Absperrkörper als sogenanntes Hahnküken ausgebildet ist.

4. Absperrvorrichtung nach Anspruch 2, dadurch gekennzeichnet, daß der Schieber (6) zweiteilig ausgebildet ist und daß die beiden Teile mittels Klemm-, Rast- oder Preßsitz miteinander verbunden sind.

Hierzu 1 Blatt Zeichnungen

# 0081216

1/1

**0081216**

Nummer der Anmeldung

Europäisches
Patentamt

## EUROPÄISCHER RECHERCHENBERICHT

| | EINSCHLÄGIGE DOKUMENTE | | EP 82111213.3 |
|---|---|---|---|
| **Kategorie** | Kennzeichnung des Dokuments mit Angabe, soweit erforderlich, der maßgeblichen Teile | Betrifft Anspruch | **KLASSIFIKATION DER ANMELDUNG (Int. Cl. ³)** |
| X | US - A - 3 042 312 (G.B. PACKARD)<br>* Gesamt *<br>-- | 1,2 | F 16 K 19/00<br>B 05 B 1/18 |
| A | WO - A1 - 80/02120 (R. PITTET)<br>* Ansprüche 1-5; Fig. 1-3 *<br>-- | 1,2,4 | |
| A | DE - A - 1 813 912 (J. CROWLEY JUN.)<br>* Seite 5, erster Absatz, Zeilen 8-11; Seite 6, Zeile 14 - Seite 7, Zeile 12; Fig. 2 *<br>-- | 1,2,4 | |
| A | US - A - 4 191 332 (D.J. DE LANGIS)<br>* Fig. 2,5 *<br>---- | 1,2 | **RECHERCHIERTE SACHGEBIETE (Int. Cl. ³)**<br><br>F 16 K 3/00<br>F 16 K 11/00<br>F 16 K 19/00<br>B 05 B 1/00<br>E 03 C 1/00 |

Der vorliegende Recherchenbericht wurde für alle Patentansprüche erstellt.

| Recherchenort | Abschlußdatum der Recherche | Prüfer |
|---|---|---|
| WIEN | 21-02-1983 | ROUSSARIAN |